# FASCICULE DE BREVET EUROPEEN

(11) **EP 2 138 980 B1**
(45) Date de publication et mention de la délivrance du brevet: **17.08.2011**
(21) Numéro de dépôt: 09290440.8
(22) Date de dépôt: 12.06.2009
(51) Int. Cl.: G06T 17/20

(54) **Méthode pour construire un maillage hybride à partir d'un maillage de type "Corner Point Geometry" (CPG)**
Verfahren zur Konstruktion einer hybriden Gitterstruktur ausgehend von einem Gitter des Typs "Corner Point Geometry" (CPG)
Method for constructing a hybrid mesh starting from a Corner-Point-Geometry mesh

(30) Priorité: 27.06.2008 FR 0803689
(43) Date de publication de la demande: 30.12.2009
(73) Titulaire: IFP Energies nouvelles, 92852 Rueil-Malmaison Cedex (FR)
(72) Inventeur: Mouton, Thibaud, 14290 Saint-Cyr-du Conceray (FR); Bennis, Chakib, 92500 Rueil-Malmaison (FR); Borouchaki, Houman, 75015 Paris (FR); Roggero, Frédéric, 92500 Rueil-Malmaison (FR)

(56) Documents cités:
- FR-A- 2 891 383
- FLANDRIN ET AL: "3d hybrid mesh generation for reservoir flow simulation" PROCEEDINGS, INTERNATIONAL MESHING ROUNDTABLE, XX, XX, 19 septembre 2004 (2004-09-19), XP002383827
- FLANDRIN N ET AL: "Diagrammes de puissance conformes pour l'ingénierie de réservoir" MECANIQUE ET INDUSTRIES, ELSEVIER, PARIS, FR, vol. 6, 1 mai 2005 (2005-05-01), pages 369-379, XP002383788 ISSN: 1296-2139

## Description

La présente invention concerne le domaine de l'étude des écoulements de fluides au sein d'une formation hétérogène.

La méthode s'applique particulièrement à l'étude des déplacements de fluides tels que des hydrocarbures dans un gisement, ou réservoir souterrain, traversé par un ou plusieurs puits, ou par des fractures ou failles.

Au cours de l'exploitation d'un gisement d'hydrocarbure, il est impératif de pouvoir simuler des profils de production de gaz ou de pétrole, afin de juger de sa rentabilité, de valider ou d'optimiser la position des puits assurant le fonctionnement de l'exploitation. Il s'agit aussi d'estimer les répercutions d'une modification technologique ou stratégique sur la production d'un gisement (choix des emplacements des nouveaux puits à forer, optimisation et choix lors de la complétion des puits, ...). Pour cela, des calculs de simulations d'écoulement sont effectués au sein du réservoir. Elles permettent de prédire, en fonction de la position des puits et de certaines caractéristiques pétrophysiques du milieu, comme la porosité ou la perméabilité, l'évolution au cours du temps des proportions d'eau, de gaz et de pétrole dans le réservoir.

Tout d'abord, une meilleure compréhension de ces phénomènes physiques nécessite de simuler en trois dimensions (3D) des écoulements polyphasiques dans des structures géologiques de plus en plus complexes au voisinage de plusieurs types de singularités telles que les stratifications, les failles et les puits complexes.

A cet effet, il est primordial de fournir aux schémas numériques, un domaine d'étude correctement discrétisé. La génération de maillage adapté devient alors un élément crucial pour les simulateurs de réservoir pétrolier, car il permet de décrire la géométrie de la structure géologique étudiée au moyen d'une représentation en éléments discrets. Cette complexité doit être prise en compte par le maillage, qui doit restituer aussi fidèlement que possible la géologie et toutes ses hétérogénéités.

Par ailleurs, pour obtenir une simulation précise et réaliste, le maillage doit s'adapter aux directions radiales des écoulements au voisinage des puits, dans les zones de drainage.

Enfin, les techniques de construction de maillage ont connu de grands progrès ces dernières années dans d'autres disciplines telles que l'aéronautique, la combustion dans les moteurs ou encore la mécanique des structures. Cependant les techniques de maillage utilisées dans ces autres domaines ne sont pas transposables telles quelles dans le monde pétrolier, car les contraintes de métier ne sont pas les mêmes. Les schémas numériques sont du type différences finies, ce qui nécessite l'utilisation de maillage cartésien trop simple pour décrire la complexité des hétérogénéités du sous-sol, ou, pour la plupart, du type éléments finis, qui sont adaptés à résoudre des problèmes elliptiques ou paraboliques et non à la résolution des équations hyperboliques comme celles obtenues pour la saturation. Les méthodes de type différences finies et éléments finis ne sont donc pas adaptées à la simulation de réservoir, seules les méthodes de type volumes finis le sont. Cette dernière est la méthode la plus utilisée en modélisation et simulation de réservoir. Elle consiste à discrétiser le domaine d'étude en volumes de contrôle sur chacun desquels les fonctions inconnues sont approchées par des fonctions constantes. Dans le cas des volumes finis centrés sur les mailles, les volumes de contrôle correspondent aux mailles et les points de discrétisation sont les centres de ces mailles. L'avantage de cette méthode est que la définition des volumes de contrôle se généralise sans problèmes à tous types de maillages, qu'ils soient structurés, non structurés ou hybrides. Par ailleurs, la méthode des volumes finis reste proche de la physique du problème et respecte le principe de la conservation de la masse (les bilans de masses des différentes phases sont écrits sur chaque maille). De plus, elle est particulièrement bien adaptée à la résolution d'équations non linéaires de type hyperbolique. Elle est donc toute indiquée pour la résolution du système hyperbolique en saturation. C'est pourquoi, nous nous baserons pour la suite sur l'utilisation de méthodes de volumes finis centrées sur les mailles.

En somme, le maillage permettant de réaliser des simulations réservoir doit être adapté :
- pour décrire la complexité de la géométrie de la structure géologique étudiée ;
- aux directions radiales des écoulements au voisinage des puits, dans les zones de drainage ;
- aux simulations par des méthodes de types volume finis centrées sur les mailles.

### État de la technique

Les maillages proposés et utilisés jusqu'à nos jours dans le domaine pétrolier sont de trois types : entièrement structurés, totalement non structurés, ou hybride, c'est-à-dire un mélange de ces deux types de maillage.

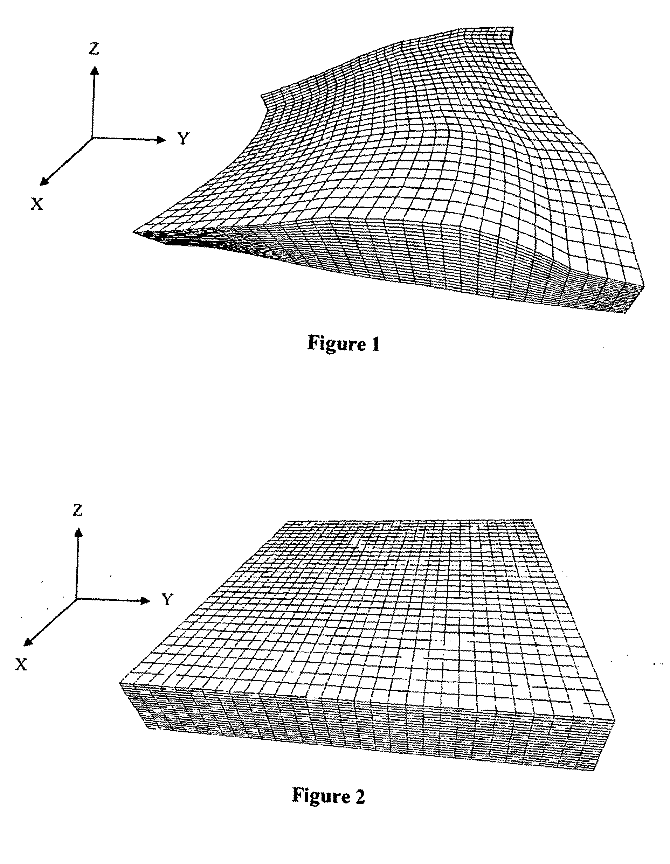

Les maillages structurés sont des maillages dont la topologie est fixe : chaque sommet interne est incident à un nombre fixé de mailles et chaque maille est délimitée par un nombre fixé de faces et d'arêtes. On peut citer par exemple les maillages cartésiens (figure 2), largement utilisés en simulation de réservoir, les maillages dit CPG, pour « Comer-Point-Geometry », décrits par exemple dans le brevet FR 2 747 490 (US 5 844 564) du demandeur, et les maillages de type radial circulaire (figure 1), permettant de modéliser l'aire de drainage des puits.

Les maillages non structurés ont une topologie complètement arbitraire : un sommet du maillage peut appartenir à un nombre quelconque de mailles et chaque maille peut posséder un nombre quelconque d'arêtes ou de faces. Les données topologiques doivent donc être stockées en permanence pour connaître explicitement les voisins de chaque noeud. Le coût mémoire impliqué par l'utilisation d'un maillage non structuré peut donc devenir rapidement très pénalisant. Cependant, ils permettent de décrire la géométrie autour des puits et de représenter les zones géologiques complexes. On peut citer par exemple les maillages du type PErpendicular BIssector (PEBI) ou Voronoï proposés dans : Z.E. Heinemann, G.F. Heinemann et B.M. Tranta, "Modelling heavily faulted reservoirs.", Proceedings of SPE Annual Technical Conferences, pages 9-19, New Orlean, Louisiana, september 1998, SPE. Les maillages structurés ont déjà montré leurs limites : leur caractère structuré facilite leur utilisation et leur exploitation mais ceci leur infère en même temps une rigidité ne permettant pas de représenter toutes les complexités géométriques de la géologie. Les maillages non structurés possèdent plus de souplesse et ont permis d'obtenir des résultats prometteurs mais ils sont encore 2,5D, c'est-à-dire que la 3^{ième} dimension n'est obtenue que par projection verticale du résultat 2D, et leur manque de structure les rend plus difficiles à exploiter.

Pour allier les avantages des deux approches, structurée et déstructurée, tout en limitant leurs inconvénients, un autre type de maillage a été envisagé : le maillage hybride. Celui-ci est l'association de différents types de maillages et permet de profiter au maximum de leurs avantages, tout en essayant d'en limiter les inconvénients. Une méthode hybride de raffinement local a été proposée dans : O.A. Pedrosa et K. Aziz, "Use of hybrid grid in reservoir simulation.", Proceedings of SPE Middle East Oil Technical Conference, pages 99-112, Bahrain, March 1985. Cette méthode consiste à modéliser une géométrie d'écoulement radiale autour d'un puits dans un maillage de réservoir de type cartésien: La jonction entre les mailles du réservoir et du puits est alors effectuée en utilisant des éléments de type hexaédrique. Cependant, la trajectoire verticale décrite par le centre du puits doit obligatoirement être située sur une ligne verticale de sommets du maillage cartésien réservoir.

Pour élargir le champ d'application de cette méthode, pour prendre en compte les puits verticaux, horizontaux et les failles dans un maillage de réservoir de type cartésien, une nouvelle méthode hybride de raffinement local a été proposée dans : S. Kocberber, "An automatic, unstructured control volume generation system for geologically complex reservoirs", Proceedings of the 14th SPE symposium on Reservoir Simulation, pages 241, 252, Dallas, juin1997. Cette méthode consiste à joindre le maillage de réservoir et le maillage de puits, ou les blocs de maillage réservoir aux bords des failles, par des éléments de type pyramidaux, prismatiques, hexaédriques ou tétraédriques. Cependant, l'utilisation de mailles pyramidales ou tétraédriques ne permet pas d'utiliser une méthode de type volumes finis centrés sur les mailles.

Par les brevets FR 2 802 324 et FR 2 801 710 du demandeur, on connaît un autre type de modèle hybride permettant de prendre en compte, en 2D et 2,5D, la géométrie complexe des réservoirs ainsi que les directions radiales des écoulements aux abords des puits. Ce modèle hybride permet de simuler de façon très précise le caractère radial des écoulements aux abords des puits par une méthode de type volumes finis centrés sur les mailles. Il est structuré presque partout, ce qui facilite son utilisation. La complexité inhérente au manque de structure n'est introduite que là où c'est strictement nécessaire, c'est-à-dire dans les zones de transition qui sont de tailles réduites. Les calculs sont rapides et la prise en compte des directions d'écoulement au travers de la géométrie des puits augmente leur précision. Si ce maillage hybride 2,5D a permis de franchir un bon pas en avant en simulation de réservoir dans des géométries complexes, il n'en reste pas moins que cette solution ne permet pas d'obtenir une simulation tout à fait réaliste lorsque les phénomènes physiques modélisés sont réellement 3D. C'est le cas, par exemple, pour une simulation locale autours d'un puits.

De plus, ces techniques de constructions de maillages hybrides nécessitent la création d'une cavité entre le maillage de réservoir et le maillage de puits. On connaît par S. Balaven-Clermidy dans "Génération de maillages hybrides pour la simulation des réservoirs pétroliers" (thèse, École des Mines de Paris, décembre 2001) différentes méthodes pour définir une cavité entre le maillage de puits et le maillage de réservoir : la cavité de taille minimale (par simple désactivation des mailles du maillage de réservoir chevauchant le maillage de puits), la cavité obtenue par dilatation et la cavité dite de Gabriel. Cependant aucune de ces méthodes n'est réellement satisfaisante : l'espace créé par la cavité ne permet pas au maillage de transition de conserver une taille de maille intermédiaire entre les mailles de puits et les mailles de réservoir.

De plus, par la demande de brevet EP 05.291.047.8 du demandeur, on connaît une autre méthode de type hybride permettant de prendre en compte, en 2D, 2,5D et 3D, la géométrie complexe des réservoirs ainsi que les directions radiales des écoulements aux abords des puits. Elle consiste à générer de manière entièrement automatique une cavité de taille minimale tout en permettant au maillage de transition de conserver une taille de maille intermédiaire entre la taille des mailles de puits et la taille des mailles de réservoir. Cette méthode permet également de construire un maillage de transition répondant aux contraintes du schéma numérique utilisé pour la simulation. Cette méthode propose des techniques d'optimisation, consistant à améliorer a posteriori le maillage hybride, pour définir un maillage de transition parfaitement admissible au sens du schéma numérique choisi. Cette approche hybride permet de relier un maillage de réservoir de type cartésien non uniforme à un maillage de puits de type radial circulaire.

Cependant, la modélisation du réservoir par un maillage cartésien n'est pas suffisante pour prendre en compte toute sa complexité géologique. Il est donc nécessaire d'utiliser des maillages structurés de type Corner Point Geometry (CPG) pour les représenter. Dans le cas général, les maillages CPG possèdent des faces quadrilatérales dont les sommets sont ni cosphériques, ni coplanaires. Les arêtes de ces maillages sont même, la plupart du temps, non Delaunay admissibles, c'est-à-dire que les sphères diamétrales de certaines arêtes sont non vides. Or la méthode décrite ci-dessus ne peut pas gérer convenablement ce type de maillage. Les méthodes actuelles permettant de générer des maillages hybrides ne sont donc plus applicables dans le cas précis de maillage CPG.

La technique décrite dans le brevet FR 2.891.383 permet de s'affranchir de ce problème. Cette méthode permet de construire de façon entièrement automatique des maillages de transition conformes lorsque le réservoir est décrit par un maillage de type CPG. Elle consiste à déformer localement un maillage de type CPG en un maillage cartésien non uniforme. Ces déformations locales de mailles correspondent au passage d'un repère dit «CPG» à un repère dit «Cartésien» défini par la déformation. Ces déformations sont ensuite quantifiées et appliquées aux maillages structurés pour passer au repère «Cartésien». On génère ensuite, dans le repère «Cartésien», un maillage hybride à partir des deux maillages ainsi déformés. Enfin, on déforme ce maillage hybride pour revenir au repère «CPG», avant d'améliorer la qualité du maillage en l'optimisant sous contrôles de qualité au sens du schéma numérique.

Cependant, selon cette technique, l'étape de déformation locale du maillage de type CPG en un maillage cartésien non uniforme, modifie également le maillage radial. En terme d'application industrielle, cette technique est donc limitée à des cas, où les déformations induites restent faibles, c'est-à-dire lorsque le réservoir pétrolier est peu complexe.

Ainsi, l'objet de l'invention concerne une méthode alternative pour évaluer des écoulements de fluides dans un milieu hétérogène. La méthode comporte la construction d'un maillage hybride à partir d'un maillage de type CPG et d'un maillage radial. Cette méthode s'affranchit des problèmes précités en déformant le maillage de type CPG en un maillage cartésien non uniforme, et en définissant puis en corrigeant une fonction de déformation de manière à ce que le maillage radial, dans le repère «Cartésien», conserve les caractéristiques géométriques nécessaires à la construction d'un maillage de transition.

### La méthode selon l'invention

L'objet de l'invention concerne une méthode pour évaluer des écoulements de fluides dans un milieu hétérogène traversé par au moins une discontinuité géométrique, à partir d'un maillage hybride dont la génération comporte la formation d'au moins un premier maillage structuré de type CPG pour mailler au moins une partie du milieu hétérogène, la formation d'au moins un second maillage structuré pour mailler au moins une partie de ladite discontinuité géométrique, lesdits maillages étant constitués de mailles définies par leurs sommets repérés par leur coordonnées dans un repère dit «CPG». La méthode comporte les étapes suivantes :
- on définit une fonction de déformation Φ, en déformant au moins une partie dudit premier maillage de type CPG en un maillage cartésien non uniforme dont les sommets sont alors repérés par leur coordonnées dans un repère dit «Cartésien» ;
- on discrétise en mailles tétraédriques des mailles dudit premier maillage CPG situées autour dudit second maillage ;
- on interpole la fonction de déformation φ à l'intérieur de chaque maille tétraédrique, pour permettre de déterminer les coordonnées d'un point dans ledit repère «CPG» à partir des coordonnées de ce même point dans ledit repère «Cartésien» ;
- on déforme ledit second maillage en exprimant les coordonnées de ses sommets dans ledit repère «Cartésien», à l'aide de ladite fonction de déformation φ;
- on modifie ladite fonction de déformation φ par déplacement des sommets et par raffinement adaptatif récursif desdits tétraèdres, de façon à ce que ledit second maillage déformé par la fonction φ soit Delaunay admissible et Voronoï admissible ;
- on génère dans ledit repère «Cartésien» un maillage hybride, en construisant un maillage de transition conforme entre ledit maillage cartésien et ledit second maillage déformé par la fonction φ ainsi modifiée ;
- on déforme ledit maillage hybride en calculant les coordonnées de ses sommets dans le repère «CPG», à l'aide de l'inverse de ladite fonction de déformation Φ ainsi modifiée.

Selon l'invention on peut modifier la fonction de déformation φ en appliquant les étapes suivantes :
- on construit un troisième maillage structuré pour mailler ladite partie de ladite discontinuité géométrique autour d'une trajectoire image par la fonction de déformation Φ d'une trajectoire initiale de ladite discontinuité ;
- on modifie la fonction de déformation φ en déplaçant itérativement les sommets des tétraèdres, de façon à ce que les sommets dudit second maillage déformé par la fonction φ ainsi modifiée aient sensiblement les mêmes positions que les sommets dudit troisième maillage.

On peut déplacer les sommets en calculant des vecteurs de déplacement en chacun des sommets des tétraèdres de la façon suivante :
- pour tout tétraèdre contenant des sommets dudit second maillage déformé par la fonction φ, on affecte à un sommet du tétraèdre une moyenne pondérée des vecteurs des sommets présents dans le tétraèdre, la pondération correspondant à une coordonnée barycentrique du sommet relative au sommet du tétraèdre considéré ;
- pour tout tétraèdre ne contenant pas de sommet dudit second maillage, on extrapole les vecteurs en examinant tous les autres sommets du tétraèdre situés à une distance prédéfinie, et en moyennant leur vecteur de déplacement associé tout en pondérant par une fonction gaussienne de ladite distance.

On peut également déplacer les sommets en calculant des vecteurs de déplacement en chacun des sommets des tétraèdres par minimisation de la déformation des mailles tétraédriques par rapport à leur forme dans ledit repère «Cartésien».

On peut enfin déplacer les sommets sous contrôle de validité des mailles tétraédriques : si un déplacement de sommet rend au moins une maille invalide, le sommet n'est pas déplacé et la maille est marquée « à raffiner ».

Selon un mode de réalisation, on applique les étapes précédentes permettant de modifier la fonction φ et calculer les vecteurs de déplacement, de manière itérative jusqu'à ce que les vecteurs de déplacement soient nuls, puis on raffine toutes les mailles ayant été marquées « à raffiner » en les subdivisant. On peut alors réitérer jusqu'à épuisement des mailles marquées « à raffiner ».

### Présentation des figures

- la figure 1 montre un maillage de réservoir de type CPG décrit dans le repère «CPG».
- la figure 2 montre le même maillage que la figure 1 décrit dans le repère «Cartésien». Ce maillage est alors représenté par une grille cartésienne non uniforme.
- la figure 3 illustre un maillage de puits dans le repère «CPG».
- la figure 4 illustre en 2D les étapes de passage de l'espace CPG vers l'espace Cartésien et de correction de l'espace Cartésien.

### Description détaillée de la méthode

La méthode selon l'invention permet de générer un maillage hybride 3D permettant la prise en compte de phénomènes physiques ayant lieu à proximité de discontinuités géométriques, comme des puits ou des fractures, lors des simulations de réservoir. Ce maillage est d'une part, adapté à la complexité de la géométrie de la structure géologique étudiée, et d'autre part, aux directions radiales des écoulements au voisinage des puits, dans les zones de drainage. Dans le domaine pétrolier, il est également nécessaire que ces maillages soient admissibles au sens des volumes finis. Pour respecter cette condition, le maillage doit posséder les propriétés suivantes :
- La discrétisation des équations des écoulements est réalisée par des approximations à deux points. Ceci implique que par une même face, une maille ne peut pas avoir plus d'une maille voisine. Cette propriété est connue sous le nom de conformité.
- Pour exprimer le gradient de pression suivant la normale à une face, une approximation à deux points entre les deux mailles adjacentes est utilisée (schémas numériques où l'approximation des flux est à deux points). Cela suppose que pour chaque maille, un centre de maille (ou point de discrétisation) doit être défini. Dès lors, une telle approximation n'est acceptable que si la droite joignant les centres de deux mailles adjacentes est orthogonale à leur face commune. Cette propriété est appelée orthogonalité du maillage.
- De la propriété précédente, il découle immédiatement que les mailles sont convexes.
- Bien qu'en théorie les points de discrétisations puissent être situés à l'extérieur de leur maille, la résolution des différentes inconnues du problème d'écoulement impose de les conserver dans leur maille. On parle alors de maille auto-centrée et de la propriété d'autocentrage du maillage.

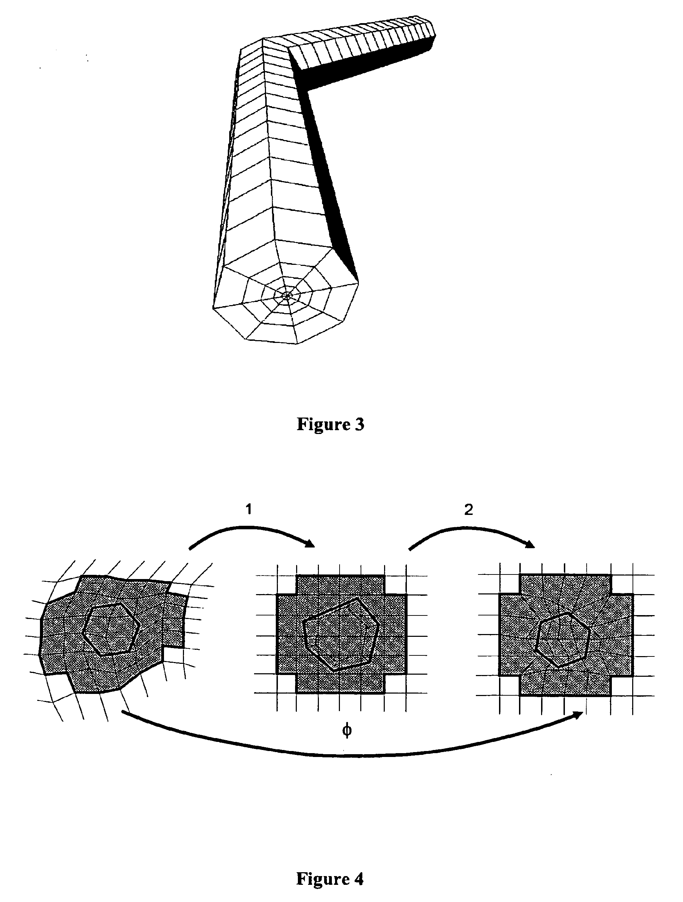

La méthode est présentée dans le cadre particulier du maillage d'un réservoir traversé par un puits. Ainsi, à partir d'un maillage de réservoir de type CPG, et de maillages de puits structurés (figure 3) bien connus des spécialistes, la méthode selon l'invention permet de générer un maillage hybride en trois dimensions admissible au sens des volumes finis.

Les méthodes classiques pour construire un maillage hybride ne pouvant pas s'appliquer à un maillage de réservoir de type CPG, la première étape consiste à déformer localement le maillage de réservoir de type CPG en un maillage cartésien non uniforme. Ces déformations locales de mailles correspondent au passage d'un repère dit «CPG» à un repère dit «Cartésien» : les sommets des mailles du maillage CPG de réservoir étant définies dans le repère «CPG», et les sommets des mailles du maillage cartésien étant définies dans le repère «Cartésien». L'idée est ensuite de quantifier cette déformation pour l'appliquer au maillage de puits. Les deux maillages ainsi déformés et décrits dans le repère «Cartésien», il est alors possible d'appliquer toutes méthodes connues pour générer un maillage hybride. Enfin, la dernière étape consiste à déformer ce maillage hybride pour revenir au repère «CPG».

Après le report du maillage hybride dans le repère «CPG», les cellules du diagramme de puissance obtenues possèdent généralement des faces courbes (non planaires). Une procédure d'optimisation peut donc être nécessaire pour rétablir au mieux la planarité des faces, tout en respectant les propriétés relatives aux volumes finis, et en particulier l'orthogonalité.

Remarque : le terme « Cartésien » qualifiant le repère « Cartésien » fait référence au maillage cartésien non uniforme. Ainsi, le repère « Cartésien » est le repère dans lequel on exprime les coordonnées du maillage cartésien non uniforme. De même, le repère « CPG » est le repère dans lequel on exprime les coordonnées du maillage CPG.

### 1) Déformation quantifiée du maillage de réservoir de type CPG

La première étape consiste à déformer le maillage de réservoir de type CPG en un maillage cartésien non uniforme et à quantifier cette déformation par une fonction de déformation.

Cette étape est décrite dans le brevet FR 2.891.383. Cette étape correspond au passage d'une description du maillage CPG dans le repère «CPG» au repère «Cartésien». Le maillage CPG étant cartésien non uniforme dans le repère «Cartésien».

Cette déformation, qui engendre donc la création d'un repère «Cartésien», se fait en projetant la grille CPG du réservoir sur une grille cartésienne non uniforme. Chaque maille du nouveau maillage est alors définie par les longueurs moyennes des mailles CPG dans les trois directions *X, Y* et *Z* de l'espace :
A titre d'illustration, la figure 1 montre un réservoir CPG décrit dans le repère «CPG», et la figure 2 illustre le même réservoir décrit dans le repère «Cartésien». Ce dernier maillage est alors représenté par une grille cartésienne non uniforme.

Ce passage du repère «CPG» au repère «Cartésien» permet donc de déformer localement des mailles du maillage de réservoir CPG. Cette déformation peut être réalisée de façon globale, c'est-à-dire appliquée à l'ensemble des mailles du maillage de réservoir, ou réalisée de façon locale, c'est-à-dire appliquée à une partie seulement des mailles du maillage de réservoir. Il peut par exemple être avantageux de n'appliquer une déformation que dans la partie nécessaire à la construction du maillage de transition, c'est-à-dire dans des zones restreintes entre le maillage de réservoir et les maillages de puits.

Après avoir déformé le maillage de type CPG en un maillage cartésien non uniforme en déplaçant les sommets des mailles, c'est-à-dire en passant du repère «CPG» au repère «Cartésien», cette déformation est quantifiée.

En effet, le passage du maillage de puits du repère «CPG» au repère «Cartésien» ou bien encore, le passage du maillage de transition du repère «Cartésien» au repère «CPG», est défini par la déformation induite par le passage de la grille CPG de réservoir dans le repère «CPG» à la grille cartésienne du réservoir dans le repère «Cartésien». Cette déformation est locale et est définie au niveau de chaque maille hexaédrique du réservoir.

Pour ce faire, pour chaque (dans le cas d'une déformation globale) maille du maillage CPG, on définit une fonction de déformation φ. Cette fonction est définie de manière discrète aux sommets des mailles, puis est interpolée à l'intérieur de chacune des mailles afin de calculer la déformation en tout point du maillage. Cette fonction permet de passer d'un repère à un autre, c'est-à-dire de déterminer les coordonnées des sommets des mailles dans le repère «Cartésien» à partir des coordonnées de ces mêmes sommets dans le repère «CPG».

On modifie le maillage cartésien au voisinage du puits : on discrétise chaque maille hexaédrique du maillage cartésien, en six mailles tétraédriques. Puis, on définit une interpolation de la fonction de déformation φ à l'intérieur de chaque maille tétraédrique, pour permettre de déterminer les coordonnées d'un point dans le repère «CPG» à partir des coordonnées de ce même point dans le repère «Cartésien». Le passage par des mailles tétraédriques permet de simplifier l'expression de φ en passant d'une expression trilinéaire dans les mailles hexaédriques, à une expression linéaire dans les mailles tétraédriques, plus simple d'utilisation. En effet, la configuration dans l'espace cartésien d'une maille hexaédrique est un parallélépipède rectangle de longueurs. Or, l'interpolation revient à calculer la position d'un point, définit par des paramètres relatifs à la maille qui le contient, en connaissant la position des sommets de cette maille. Ainsi, un point inclus dans une maille hexaédrique est défini par huit paramètres. Ces paramètres sont exprimables dans l'espace de référence, mais n'ont pas d'expression analytique dans l'espace réel. Il en résulte que pour déterminer les paramètres d'un point dans l'espace réel (hexaèdre déformé), il est nécessaire de procéder à un calcul des moindres carrés, consistant en une routine d'optimisation coûteuse. En discrétisant les hexaèdres en tétraèdres, la fonction d'interpolation de la déformation peut alors être simplifiée, et l'expression analytique des paramètres existe alors dans les espaces réel et cartésien.

### 2) Correction de la fonction de déformation au bord du maillage radial

On déforme ensuite le maillage de puits, en exprimant les coordonnées de ses sommets dans le repère «Cartésien», à l'aide de la fonction de déformation.

Cette déformation étant généralement trop importante (cas de maillage CPG à grandes déformations), les conditions nécessaires à la génération d'un maillage hybrides ne sont plus respectées : les propriétés géométriques de la frontière du maillage radial ne permettent pas de générer un maillage polyédrique. On rappelle que les conditions nécessaires à la génération d'un maillage hybrides sont la Delaunay admissibilité et la Voronoï admissibilité des faces de la surface externe du maillage radial (frontière du maillage radial). On rappelle que la frontière de la cavité est Delaunay admissible, si les arêtes des faces la constituant appartiennent à la triangulation de Delaunay obtenue à partir de ses sommets. De même, la frontière de la cavité est Voronoï admissible, si ses faces font partie du diagramme de Voronoï obtenu à partir de ses sommets. La figure 4 illustre en 2D les étapes 1) de passage de l'espace CPG vers l'espace Cartésien et l'étape 2) de correction de l'espace Cartésien. Les lignes noires fines représentent le maillage CPG à droite, puis transformé en maillage cartésien au centre et à droite. La zone grisée correspond à une zone autours du maillage radial. Il s'agit de la cavité nécessaire à la création du maillage hybride. L'hexagone au centre de chaque image, correspond au maillage radial de puits. Les lignes noires épaisses représentent les frontières de la cavité. Il s'agit des surfaces de contraintes pour la génération du maillage hybride. Enfin la ligne pointillée, au centre de l'hexagone de l'image du milieu, représente un maillage radial idéal R2. Le numéro 1 indique l'étape correspondant au passage du maillage de type CPG, au maillage de type cartésien, et le numéro 2 indique l'étape correspondant à la correction de la fonction de déformation φ.

L'objectif de cette étape est donc de corriger la frontière du maillage radial, de façon à lui rendre les propriétés géométriques nécessaires à la génération du maillage polyédrique. On modifie donc localement la fonction de déformation φ, de façon à ce que la déformation du maillage radial par cette fonction, induise un maillage dont la frontière respecte les conditions nécessaires à la génération d'un maillage hybride.

Cet objectif est atteint en modifiant la fonction de déformation φ par déplacement des sommets et par raffinement adaptatif récursif des tétraèdres, de façon à ce que le maillage de puits déformé par la fonction φ soit Delaunay admissible et Voronoï admissible. On peut y parvenir en réalisant les deux étapes suivantes :

### a) Détermination d'une image idéale du maillage radial autour du puits

En modélisation des réservoirs, le puits physique est simplement représenté par une courbe décrivant sa trajectoire. Afin d'obtenir une surface présentant les propriétés requises pour la génération du maillage polyédrique, on reconstruit le maillage radial circulaire autour de la trajectoire image par φ de la trajectoire initiale. La méthode de reconstruction du maillage radial utilisée est une méthode classique employée pour construire le maillage initial, c'est à dire un « *sweeping* » de la section circulaire le long de la trajectoire du puits. On dispose ainsi de deux maillages radiaux :
- un maillage radial R1, déformé et que l'on souhaite modifier en corrigeant la fonction φ.
- un maillage radial R2, idéal par construction.

### b) Correction de la fonction de déformation au bord du maillage radial

Pour corriger la fonction φ au voisinage du maillage radial, on modifie le maillage R1 de façon à ce que le maillage R1 ressemble au maillage R2. Il s'agit donc de rechercher la position des sommets du maillage cartésien, au voisinage du puits, pour que l'image par la fonction de déformation du maillage radial initial corresponde à R2. Pour cela, on déplace itérativement les sommets de l'espace cartésien jusqu'à obtenir le résultat escompté. La méthode comporte les étapes suivantes :
- on définit une zone, appelée voisinage du puits, autours du maillage radial. Il s'agit de façon avantageuse de la cavité nécessaire à la création du maillage hybride. La demande de brevet EP 05 291 047 8 décrit une méthode pour construire une telle cavité.
- on calcule des vecteurs de déplacement permettant de déterminer un vecteur pour chacun des sommets de l'espace cartésien, contenus dans le voisinage du puits.

En effet, le passage de R1 à R2 peut être décrit par le déplacement des sommets de R1 suivant un vecteur qui est propre à chaque sommet. L'ensemble de ces vecteurs forme un champ de vecteurs. Ce champ de vecteur étant uniquement définis sur les sommets de R1, on définit des vecteurs en chacun des sommets de l'espace cartésien. Les trois méthodes décrites ci-après permettent de calculer les vecteurs de déplacement en chacun des sommets de l'espace cartésien.

### (i) Extrapolation du champ de déplacement dans les tétraèdres

Les mailles tétraédriques peuvent contenir des sommets de R1. Dans ce cas, on affecte à un sommet du tétraèdre le résultat de la moyenne pondérée des vecteurs des sommets présent dans le tétraèdre. La pondération correspond à la coordonnée barycentrique du sommet de R1 relative au sommet (du tétraèdre) considéré.

### (ii) Extrapolation du champ de déplacement hors des tétraèdres

Lorsque tous les tétraèdres contenant des sommets ont été traités, on extrapole les vecteurs précédemment calculés aux sommets de l'espace cartésien sur lesquels l'extrapolation précédente était impossible. Cette extrapolation consiste, pour chaque sommet de l'espace cartésien dont le vecteur de déplacement est nul :
- à examiner tous les autres sommets situés à une distance prédéfinie
- à moyenner leur vecteur de déplacement associé en pondérant par un coefficient. Le coefficient de pondération correspond au résultat de l'exponentielle de l'opposé du carré de la distance (fonction gaussienne de la distance).

### (iii) Minimisation de la déformation

Afin de minimiser au maximum la déformation de l'espace suite à sa « correction », on cherche à minimiser la déformation des mailles tétraédriques par rapport à leur forme dans l'espace cartésien.

La déformation correspond à la norme de la « matrice différence » entre la matrice de l'application linéaire définissant la transformation «maille initiale vers maille déformée » et a matrice de l'application linéaire identité. Il est donc possible, pour un sommet d'une maille tétraédrique donnée dans son état initial et déformée, de calculer la position minimisant la norme précédemment définie. On en déduit donc un vecteur de déplacement pour passer de la configuration actuelle à celle de la déformation minimale.
- on affecte un vecteur de déplacement de norme nulle aux sommets correspondant aux bords externe de la cavité, afin de ne pas dégrader les propriétés obtenues par la définition d'un espace cartésien.
- on applique ensuite effectivement les déplacements des sommets de l'espace cartésien sous contrôle de la validité des mailles tétraédriques. Si un déplacement de sommet rend une ou plusieurs maille(s) invalide(s), le sommet n'est pas déplacé, ces mailles sont marquées « à raffiner ».
- on répète ce processus jusqu'à ce que le déplacement des sommets soit nul.
- l'image du maillage radial par la fonction de déformation redéfinie est alors comparée au maillage idéal R2.

Si les deux maillages correspondent (position des sommets des maillages identique à un epsilon près), la fonction de déformation est correctement définie et la construction du maillage polyédrique de transition est alors possible.

Dans le cas contraire, les deux maillages ne correspondent pas, ce qui signifie que la correction de la fonction de déformation n'est pas suffisante : il existe des mailles marquées « à raffiner ». On enrichit alors la définition de la fonction de déformation en subdivisant des mailles tétraédriques de l'espace cartésien. C'est ce que l'on appelle un raffinement adaptatif récursif des tétraèdres. La subdivision consiste d'abord à repérer les tétraèdres responsables (marqués « à raffiner »), c'est-à-dire contenant des sommets du maillage radial qui ne correspondent pas avec ceux de R2. On effectue ensuite la subdivision de ces tétraèdres suivant une méthode classique utilisant des motifs prédéfinis. En pratique, les sommets de l'espace cartésien modifié sont réinitialisés par retour à leur position antérieure avant d'effectuer la subdivision de manière à conserver la validité des mailles tétraédriques. Une fois la subdivision effectuée, la boucle précédemment décrite est relancée sur l'espace cartésien enrichi. Cette boucle est appliquée autant de fois que nécessaire afin d'obtenir la correspondance entre l'image du maillage radial par la fonction de déformation et R2.

### 3) Construction d'un maillage hybride dans le repère «Cartésien»

A partir des deux maillages ainsi déformés et décrits dans le repère «Cartésien» corrigés, on peut appliquer toutes méthodes connues pour générer un maillage hybride dans ce repère «Cartésien» corrigé. On peut de façon avantageuse utiliser la méthode décrite dans la demande de brevet EP 05 291 047 8. Cette méthode permet de générer un maillage hybride en combinant des maillages structurés et des maillages non structurés. Le maillage hybride est réalisé en associant un premier maillage structuré pour mailler le réservoir à des deuxièmes maillages structurés pour mailler des zones autour des puits ou des failles. Selon cette méthode, on génère dans un premier temps de manière entièrement automatique, une cavité de taille minimale permettant aux mailles du maillage de transition d'avoir une taille intermédiaire entre la taille des mailles du premier maillage et la taille des mailles des deuxièmes maillages. Puis, on construit un maillage de transition répondant aux contraintes du schéma numérique utilisé pour la simulation des écoulements de fluide au sein du réservoir. Enfin, on améliore la qualité du maillage de transition en l'optimisant sous contrôles de qualité au sens du schéma numérique, dans le but de définir un maillage de transition parfaitement admissible au sens du schéma numérique choisi.

### 4) Déformation du maillage hybride par application de la fonction de déformation φ⁻¹

L'étape suivante consiste à déformer le maillage hybride du repère «Cartésien» corrigé, pour revenir au repère «CPG», en appliquant la méthode décrite dans le brevet FR 2.891.383 pour un maillage à maille tétraédrique. Cette méthode consiste à effectuer les opérations suivantes pour chaque sommet P :
- rechercher la maille tétraédrique du repère «Cartésien» qui contient le point *P* ;
- définir la fonction de déformation φ⁻¹ associé à la maille tétraédrique du repère «Cartésien»;
- appliquer cette fonction de déformation φ⁻¹ au point *P*.

Enfin, le maillage hybride peut être optimisé afin de retrouver des caractéristiques qui auraient été altérée par la déformation finale du maillage. En particulier, l'optimisation en tant que telle est intéressante car la qualité (la convergence des schémas, la précision des résultats) des solutions numériques associées aux noeuds d'un maillage dépend, à l'évidence, de la qualité de celui-ci. A ce titre, la méthode selon l'invention comprend, en fin de processus de génération de maillage hybride, une étape d'optimisation qui consiste à améliorer la qualité du maillage.

Le maillage hybride ainsi généré peut être directement utilisé dans un simulateur d'écoulements. Ainsi, la méthode selon l'invention permet de simuler des profils de production de gaz ou de pétrole, afin de juger de la rentabilité d'un gisement, de valider ou d'optimiser la position des puits assurant le fonctionnement de l'exploitation. La méthode permet ainsi d'estimer les répercutions d'une modification technologique ou stratégique sur la production d'un gisement (choix des emplacements des nouveaux puits à forer, optimisation et choix lors de la complétion des puits, ...).

La méthode comporte la génération d'un maillage hybride en trois dimensions à partir de maillages de type CPG et de maillages structurés tels que des maillages radiaux, de façon a représenter finement la structure et le comportement d'un milieu hétérogène traversé par au moins une discontinuité géométrique. Ce maillage hybride permet la prise en compte de phénomènes physiques ayant lieu à proximité de discontinuités géométriques, comme des puits ou des fractures, lors des simulations de réservoir qui permettent de caractériser les écoulements de fluides. Ce maillage est d'une part, adapté à la complexité de la géométrie de la structure géologique étudiée, et d'autre part, aux directions radiales des écoulements au voisinage des puits, dans les zones de drainage. Enfin le maillage hybride généré selon l'invention est admissible au sens des volumes finis : il possède les propriétés de conformité, d'orthogonalité, de convexité et d'auto-centrage.

Selon la méthode, le maillage hybride ainsi généré est utilisé dans un simulateur d'écoulements, pour modéliser les déplacements de fluides dans le milieu, en redéfinissant la notion de normalité entre les faces des mailles du maillage. Cette notion est également utilisée pour définir un critère d'orthogonalité nécessaire à l'optimisation.

La méthode pour générer le maillage hybride a été utilisée dans le cadre de l'évaluation d'un gisement pétrolier. Il est cependant évident qu'une telle technique de construction de maillage hybride peut être utilisée dans tous domaines techniques nécessitant l'utilisation de maillages de types différents (industrie automobile, aéronautique,...).

## Revendications

1. Méthode pour évaluer des écoulements de fluides dans un milieu hétérogène traversé par au moins une discontinuité géométrique, à partir d'un maillage hybride dont la génération comporte la formation d'au moins un premier maillage structuré de type *Corner- Point - Geometry* « CPG » pour mailler au moins une partie du milieu hétérogène, la formation d'au moins un second maillage structuré pour mailler au moins une partie de ladite discontinuité géométrique, lesdits maillages étant constitués de mailles définies par leurs sommets repérés par leur coordonnées dans un repère dit «CPG», la méthode comportant les étapes suivantes :
- on définit une fonction de déformation φ, en déformant au moins une partie dudit premier maillage de type CPG en un maillage cartésien non uniforme dont les sommets sont alors repérés par leur coordonnées dans un repère dit «Cartésien» ;
- on discrétise en mailles tétraédriques des mailles dudit premier maillage CPG situées autour dudit second maillage ; La méthode étant **caractérisée en ce qu'**elle comporte en plus les étapes suivantes :
- on interpole la fonction de déformation φ à l'intérieur de chaque maille tétraédrique, pour permettre de déterminer les coordonnées d'un point dans ledit repère «CPG» à partir des coordonnées de ce même point dans ledit repère «Cartésien» ;
- on déforme ledit second maillage en exprimant les coordonnées de ses sommets dans ledit repère «Cartésien», à l'aide de ladite fonction de déformation φ;
- on modifie ladite fonction de déformation φ par déplacement des sommets et par raffinement adaptatif récursif desdits tétraèdres, de façon à ce que ledit second maillage déformé par la fonction φ soit Delaunay admissible et Voronoï admissible ;
- on génère dans ledit repère «Cartésien» un maillage hybride, en construisant un maillage de transition conforme entre ledit maillage cartésien et ledit second maillage déformé par la fonction Φ ainsi modifiée ;
- on déforme ledit maillage hybride en calculant les coordonnées de ses sommets dans le repère «CPG», à l'aide de l'inverse de ladite fonction de déformation φ ainsi modifiée.

2. Méthode selon la revendication 1, dans laquelle on modifie ladite fonction de déformation φ en appliquant les étapes suivantes :
- on construit un troisième maillage structuré pour mailler ladite partie de ladite discontinuité géométrique autour d'une trajectoire image par la fonction de déformation φ d'une trajectoire initiale de ladite discontinuité ;
- on modifie la fonction de déformation φ en déplaçant itérativement les sommets des tétraèdres, de façon à ce que les sommets dudit second maillage déformé par la fonction φ ainsi modifiée aient sensiblement les mêmes positions que les sommets dudit troisième maillage.

3. Méthode selon la revendication 2, dans laquelle on déplace les sommets en calculant des vecteurs de déplacement en chacun des sommets des tétraèdres de la façon suivante :
- pour tout tétraèdre contenant des sommets dudit second maillage déformé par la fonction φ, on affecte à un sommet du tétraèdre une moyenne pondérée des vecteurs des sommets présents dans le tétraèdre, la pondération correspondant à une coordonnée barycentrique du sommet relative au sommet du tétraèdre considéré ;
- pour tout tétraèdre ne contenant pas de sommet dudit second maillage, on extrapole les vecteurs en examinant tous les autres sommets du tétraèdre situés à une distance prédéfinie, et en moyennant leur vecteur de déplacement associé tout en pondérant par une fonction gaussienne de ladite distance.

4. Méthode selon la revendication 2, dans laquelle on déplace les sommets en calculant des vecteurs de déplacement en chacun des sommets des tétraèdres par minimisation de la déformation des mailles tétraédriques par rapport à leur forme dans ledit repère «Cartésien».

5. Méthode selon la revendication 2, dans laquelle on déplace les sommets sous contrôle de validité des mailles tétraédriques : si un déplacement de sommet rend au moins une maille invalide, le sommet n'est pas déplacé et la maille est marquée « à raffiner ».

6. Méthode selon les revendications 2, 3, 4 et 5, dans laquelle les étapes des revendications 2, 3, 4 et 5 sont appliquées de manière itérative jusqu'à ce que lesdits vecteurs de déplacement soient nuls, puis on raffine toutes les mailles ayant été marquées « à raffiner » en les subdivisant.

7. Méthode selon la revendication 6, dans laquelle on applique la méthode de la revendication 6 de manière itérative, jusqu'à épuisement des mailles marquées « à raffiner ».

## Claims

1. A method for evaluating fluid flows in a heterogeneous medium traversed by at least one geometric discontinuity, from a hybrid grid whose generation comprises forming at least a first Corner-Point-Geometry "CPG" type structured grid for gridding at least part of the heterogeneous medium and forming at least a second structured grid for gridding at least part of said geometric discontinuity, said grids consisting of cells defined by their vertices identified by their coordinates in a reference frame referred to as "CPG" frame, the method comprising the following stages:
- defining a deformation function φ by deforming at least part of said first CPG type grid into a non-uniform Cartesian grid whose vertices are then identified by their coordinates in a frame referred to as "Cartesian" frame,
- discretizing cells of said first CPG grid located around said second grid into tetrahedral cells, the method being **characterized in that** it furthermore comprises the following stages:
- interpolating deformation function φ within each tetrahedral cell so as to allow to determine the coordinates of a point in said "CPG" frame from the coordinates of this point in said "Cartesian" frame,
- deforming said second grid by expressing the coordinates of its vertices in said "Cartesian" frame, by means of said deformation function φ,
- modifying said deformation function φ by displacement of the vertices and recursive adaptive refinement of said tetrahedra, so that said second grid deformed by function φ is Delaunay admissible and Voronoï admissible,
- generating in said "Cartesian" frame a hybrid grid by constructing a conformal transition grid between said Cartesian grid and said second grid deformed by function φ thus modified,
- deforming said hybrid grid by calculating the coordinates of its vertices in the "CPG" frame, by means of the inverse of said deformation function φ thus modified.

2. A method as claimed in claim 1, wherein said deformation function φ is modified by applying the following stages:
- constructing a third structured grid for gridding said part of said geometric discontinuity around an image trajectory by deformation function φ of an initial trajectory of said discontinuity,
- modifying deformation function φ by iteratively displacing the vertices of the tetrahedra, so that the vertices of said second grid deformed by function φ thus modified have substantially the same positions as the vertices of said third grid.

3. A method as claimed in claim 2, wherein the vertices are displaced by calculating displacement vectors at each vertex of the tetrahedra as follows:
- for any tetrahedron containing vertices of said second grid deformed by function φ, assigning to a tetrahedron vertex a weighted mean of the vectors of the vertices present in the tetrahedron, weighting corresponding to a barycentric coordinate of the vertex relative to the vertex of the tetrahedron considered,
- for any tetrahedron containing no vertex of said second grid, extrapolating the vectors by examining all the other vertices of the tetrahedron located at a predetermined distance and by weighting their associated displacement vector while weighting by a Gaussian function of said distance.

4. A method as claimed in claim 2, wherein the vertices are displaced by calculating displacement vectors at each vertex of the tetrahedra by minimizing the deformation of the tetrahedral cells with respect to their shape in said "Cartesian" frame.

5. A method as claimed in claim 2, wherein the vertices are displaced under validity control of the tetrahedral cells: if a vertex displacement makes at least one cell invalid, the vertex is not displaced and the cell is marked "to be refined".

6. A method as claimed in claims 2, 3, 4 and 5, wherein the stages of claims 2, 3, 4 and 5 are applied iteratively until said displacement vectors are zero, then all the cells marked "to be refined" are refined by subdividing them.

7. A method as claimed in claim 6, wherein the method of claim 6 is applied iteratively until the cells marked "to be refined" are exhausted.

## Patentansprüche

1. Verfahren zur Bewertung des Strömungsverhaltens von Fluiden in einem heterogenen Milieu, das von mindestens einer geometrischen Unstetigkeit durchzogen ist, auf Grundlage eines Hybridgitters, dessen Erstellung die Bildung mindestens eines ersten strukturierten Gitters mit Eckpunktgeometrie ("Corner-Point-Geometry", CPG) zur Parkettierung mindestens eines Abschnitts des heterogenen Milieus, die Bildung mindestens eines zweiten strukturierten Gitters zur Parkettierung mindestens eines Abschnitts der geometrischen Unstetigkeit aufweist, wobei die Gitter aus Zellen bestehen, die über ihre Eckpunkte definiert werden, welche anhand ihrer Koordinaten in einem "CPG"-Bezugssystem festgelegt sind, wobei das Verfahren die folgenden Schritte aufweist:
- Definieren einer Verformungsfunktion Φ, indem mindestens ein Abschnitt des ersten Gitters vom Typ CPG zu einem nicht gleichförmigen kartesischen Gitter verformt wird, dessen Eckpunkte daraufhin anhand ihrer Koordinaten in einem "kartesischen" Koordinatensystem festgelegt werden;
- Diskretisieren von Zellen des ersten CPG-Gitters, welche rundum das zweite Gitter gelegen sind, zu tetraedrischen Zellen;
wobei das Verfahren **dadurch gekennzeichnet, dass** es zusätzlich die folgenden Schritte aufweist:
- Intrapolieren der Verformungsfunktion Φ innerhalb jeder der tetraedrischen Zellen, um es zu ermöglichen, die Koordinaten eines Punktes im "CPG"-Bezugssystem auf Grundlage der Koordinaten desselben Punktes im "kartesischen" Bezugssystem zu bestimmen;
- Verformen des zweiten Gitters mit Hilfe der Verformungsfunktion Φ, indem die Koordinaten der Eckpunkte desselben im "kartesischen" Bezugssystem zum Ausdruck gebracht werden;
- Modifizieren der Verformungsfunktion Φ durch Verschiebung der Eckpunkte und durch adaptiv-rekursive Feinanpassung der Tetraeder, sodass das zweite Gitter, das durch die Funktion Φ verformt wurde, die Delaunay-Bedingung und die Voronoi-Bedingung erfüllt;
- Erstellen eines Hybridgitters im "kartesischen" Bezugssystem, indem zwischen dem kartesischen Gitter und dem zweiten Gitter, das durch die auf diese Weise modifizierte Funktion Φ verformt wurde, ein Übergangsgitter konstruiert wird;
- Verformen des Hybridgitters mit Hilfe der Umkehrfunktion der auf diese Weise modifizierten Verformungsfunktion Φ, indem die Koordinaten der Eckpunkte desselben im "CPG"-Bezugssystem berechnet werden.

2. Verfahren nach Anspruch 1, wobei die Verformungsfunktion Φ unter Durchführung der folgenden Schritte modifiziert wird:
- Konstruieren eines dritten strukturierten Gitters zur Parkettierung des Abschnitts der geometrischen Unstetigkeit, rundum einen Verlauf, der eine Abbildung des Ursprungsverlaufs der Unstetigkeit durch die Verformungsfunktion Φ darstellt.
- Modifizieren der Verformungsfunktion Φ, indem die Eckpunkte der Tetraeder derart iterativ verschoben werden, dass die Eckpunkte des zweiten Gitters, das durch die auf diese Weise modifizierte Funktion Φ verformt wurde, im Wesentlichen dieselben Positionen wie die Eckpunkte des dritten Gitters haben.

3. Verfahren nach Anspruch 2, wobei die Eckpunkte verschoben werden, indem an jedem der Eckpunkte der Tetraeder folgendermaßen Verschiebungsvektoren berechnet werden:
- für sämtliche Tetraeder, die Eckpunkte des zweiten Gitters enthalten , welches durch die Funktion Φ verformt wurde, wird einem Eckpunkt des Tetraeders ein gewichteter Mittelwert der Vektoren der Eckpunkte, die in dem Tetraeder vorliegen, zugewiesen, wobei die Gewichtung einer baryzentrischen Koordinate des Eckpunkts bezüglich des Eckpunkts des betrachteten Tetraeders entspricht;
- für sämtliche Tetraeder, die keinerlei Eckpunkte des zweiten Gitters enthalten, werden die Vektoren extrapoliert, indem die anderen Eckpunkte des Tetraeders, die in einer zuvor festgelegten Entfernung gelegen sind, untersucht werden und der Mittelwert ihrer jeweiligen Verschiebungsvektoren gebildet wird, wobei gleichzeitig eine Gewichtung mittels einer Gauß-Funktion der Entfernung vorgenommen wird.

4. Verfahren nach Anspruch 2, wobei die Eckpunkte verschoben werden, indem an jedem der Eckpunkte der Tetraeder Verschiebungsvektoren durch Minimierung der Verformung der tetraedrischen Zellen gegenüber ihrer Form im "kartesischen" Bezugssystem berechnet werden.

5. Verfahren nach Anspruch 2, wobei die Eckpunkte unter Überprüfung der Validität der tetraedrischen Zellen verschoben werden: wenn eine Eckpunktverschiebung die Validität mindestens einer Zelle aufhebt, wird der Eckpunkt nicht verschoben, und die Zelle wird als "feinanpassungsbedürftig" gekennzeichnet.

6. Verfahren nach den Ansprüchen 2, 3, 4 und 5, wobei die Schritte der Ansprüche 2, 3, 4, und 5 solange iterativ durchgeführt werden, bis die Verschiebungsvektoren gleich null sind, woraufhin sämtliche Zellen, die als "feinanpassungsbedürftig" gekennzeichnet wurden, eine Feinanpassung erfahren, indem sie in kleinere Einheiten unterteilt werden.

7. Verfahren nach Anspruch 6, wobei das Verfahren des Anspruchs 6 solange iterativ durchgeführt wird, bis keine Zellen mehr vorliegen, die als "feinanpassungsbedürftig" gekennzeichnet sind.
